# EUROPEAN PATENT APPLICATION

(11) **EP 4 678 545 A1**
(43) Date of publication of application: **14.01.2026**
(21) Application number: 24766555.7
(22) Date of filing: 27.02.2024
(51) Int. Cl.: B65D 1/00, B65D 1/16, B65D 1/20, B65D 25/38, B65D 25/40, B65D 25/48, B65D 41/00, B65D 55/12, B65D 43/00, B65D 47/00, B65D 83/00, B65D 83/06, A47F 1/16, G01F 11/26

(54) **DEVICE FOR STORING AND DISPENSING A LIQUID, POWDERED, GRANULATED OR LOOSE PRODUCT**

(30) Priority: 03.03.2023 ES 202330345 U
(71) Applicant: Antón Malo, Miguel, 50019 Zaragoza (ES)
(72) Inventor: Antón Malo, Miguel, 50019 Zaragoza (ES)
(74) Representative: Curell Suñol S.L.P.
(86) International application number: PCT/ES2024/070111
(87) International publication number: WO 2024/184562

(57) **Abstract**

The invention relates to a device (1) for storing and dispensing a liquid, powdered, granular or bulk product (100), said device comprising a support (12) and a container (2) that forms an inner chamber (4) for storing the product (100) and comprises a supply opening (6) that communicates the inner chamber (4) with the outside to supply the product (100). The container (2) is coupled to the support (12) and can rotate around a first axis of rotation (16), defined by the coupling between the support (12) and the container (2), between at least one storage position of the product (100) and at least one dispensing position of the product (100), for dispensing the product (100) by means of gravity through the supply opening (6). In the dispensing position, the supply opening (6) is at a lower height than when in the storage position.

## Description

### Field of the Invention

The invention is comprised in the sector of product distribution and storage.

More particularly, the invention relates to a device for storing and dispensing a liquid, powdered, granular or bulk product.

### State of the Art

**In** recent decades, there has been an exponential increase in single-use packages for liquid, powdered or granular products, manufactured from different materials such as glass, sheet metal, composite laminar material or plastic. This represents an unnecessary waste of packages, which in most cases is not fully justified.

Another problem arising from and added to the above is the increase in the use of plastic as the material of first choice for manufacturing packages that were previously manufactured from glass or aluminium.

This change in the sector has led to the generation of a huge amount of plastic waste which, in the best case scenario, must be deposited in specific containers, collected, sorted and processed so that, where possible, the plastic material can be recycled in future manufacturing processes for other packages.

Despite this, very often these packages end up being disposed of in an uncontrolled manner in the environment. Over the years, there has been a very significant accumulation of plastic waste in fields, rivers, seas, oceans or the like. There is virtually nowhere on earth where some form of plastic waste cannot be found.

Despite the drawbacks explained, modern society is highly dependent on plastic due to its low cost and ease of processing. It therefore seems utopian to attempt to seek to completely eliminate the use of plastic.

A more realistic approach would therefore seem to be to reduce the environmentally unsustainable use of single-use packages, i.e. to increase the reuse of the same package multiple times and to favour the distribution of bulk materials, as was done during the first half of the 20th century.

This is why there is a growing need to have devices for storing liquid, powdered, granular or bulk products which, regardless of the material which they are manufactured, allow the distribution and dispensing in larger volumes, but without hindering their handling and comfort during dispensing. This would allow the number of packages required for these purposes to be reduced and the reuse of these packages multiple times to be promoted.

All of this would therefore lead to a significant reduction in the generation of waste in the form of used packages.

### Summary of the Invention

The object of the invention is to provide a device for storing and dispensing a liquid, powdered, granular or bulk product of the type indicated above that facilitates the comfortable distribution, storage and dispensing of liquid, powdered, granular or bulk products and in formats that reduce the consumption of packages.

This object is achieved by means of a device for storing and dispensing a liquid, powdered, granular or bulk product of the type indicated above, characterised in that it comprises a support and a container that forms an inner chamber for storing said product and comprises a supply opening that communicates said inner chamber with the outside to supply said product, said container and said support being configured such that said container is coupled to said support, said container being able to rotate relative to said support around at least one first axis of rotation, said first axis of rotation being defined by the coupling between said support and said container, between at least one storage position of said product and at least one dispensing position of said product, for dispensing said product by means of gravity through said supply opening, such that in said dispensing position, said supply opening is at a lower height than in said storage position.

**In** the invention, a bulk product is understood to be a product composed of small items, without order, number, or size.

The invention relates to a very simple device for storing and dispensing a liquid, powdered, granular or bulk product that facilitates the adoption of larger volume formats. The device takes advantage of the geometry of an external and internal surface of the container for it to functionally collaborate with the support, facilitating the relative rotational movement between the container and the support. To that end, the invention provides that the container rotates relative to the support around an axis of rotation defined by the coupling between said support and said container. In most cases, the container rotates about its own axis or axes to perform product storage functions in one or more storage positions and for dispensing its contents in one of multiple dispensing positions, which are at a lower height than when in the storage position and allow the product to fall out by means of gravity through the opening. In the storage position, the supply opening is located in the upper part, preventing the discharge of the bulk product. In contrast, as the entire container rotates about the support, the supply opening is lowered until it is located at the product level line, corresponding to a dispensing position, thereby allowing the product to be poured out. Both the storage position and the dispensing position can be a single position, but they generally consist of a plurality of positions that vary depending on the amount of bulk product contained in the container.

One of the biggest advantages of the device according to the invention consists of the fact that the container usually rotates about its own axis. This facilitates the dispensing of the bulk product without any physical effort by the user, since the container rotates about itself virtually without displacing the liquid it contains.

Despite the fact that it is not essential for the invention, the container favours the distribution of bulk products since it provides a very practical and effortless way for dispensing the product.

Also, as a result of providing the support and the relative rotation of the container relative to the support, the distribution of products in larger volume formats can be promoted. Specifically, one of the usual problems in large volumes is the dispensing process. In contrast, in the device according to the invention the dispensing can be very precise, progressive, and without any physical effort for the user. The rotational movement around the axis of rotation and its multiple dispensing positions allow the dispensing flow rate to be regulated in a very simple manner.

Furthermore, the same container can be refilled multiple times.

Furthermore, the invention covers a series of preferred features that are the subject matter of the dependent claims and the usefulness of which will become apparent below in the detailed description of an embodiment of the invention.

In a preferred embodiment, the device according to the invention comprises first coupling means for coupling said container to said support, said first coupling means defining said first axis of rotation. These means reduce the effort required to rotate the container and the support relative to one another to a minimum. Basically, the axis of rotation defined by the first coupling means is defined by the geometric location corresponding to the instantaneous axis of rotation of the container when its external surface is resting on the support.

In one embodiment that seeks simplicity of construction without sacrificing a solid design, said first coupling means are formed by a functional combination of an external surface of said container supported on one or more elements of said support of the group consisting of rolling elements, point sliding supports, linear sliding supports, sliding surfaces, or combinations thereof. Any of the possible solutions is easy and inexpensive to manufacture, but at the same time they are reliable and unlikely to break.

The rolling elements are one or more of the group consisting of ball bearings, roller bearings, idler wheels, idler cylinders, idler balls or the like, and combinations thereof. As for the point sliding support elements, convex protrusions projecting from the support, such spheres or the like, for example, can be mentioned. In turn, the linear sliding supports comprise stationary cylinders, prismatic-shaped protrusions extending longitudinally along an axis parallel to the axis of rotation of the container, a wedge-shaped support providing two linear supports for the container or the like. Finally, sliding surfaces refer to those surface supports in which the support has a complementary shape relative to the external support surface of the container. All these elements allow the container to rotate by rolling or sliding relative to the support with great ease.

Another embodiment according to the invention seeks to take maximum advantage of the volume of the container and facilitate the filling thereof, either for the first time or for reuse. To that end, preferably said supply opening is formed by a tubular conduit that has a second axis, and said second axis of the tubular conduit is contained in a central vertical plane of symmetry of said container, said tubular conduit projecting outwardly relative to an outer contour of said container that delimits said inner chamber, and said second axis forming a first angle relative to a horizontal support plane of said support. Alternatively, said tubular conduit may be positioned asymmetrically.

In another embodiment that seeks to maximally reduce the effort to rotate the container, said container has a shape that delimits said inner chamber, such that it allows that during the relative rotation between said container and said support around said first axis of rotation, the volume occupied by said product contained in said container is substantially at rest.

In a particularly preferred manner, said shape of the container is a sphere centred on said first axis of rotation or a body of revolution around said first axis of rotation, said body of revolution being formed by a generatrix comprising a straight line or an outwardly convex curve and oriented to facilitate the discharge of said product contained in said container when said container rotates from said storage position to said at least one dispensing position.

Preferably, said coupling means are configured such that said container can rotate relative to said support from said storage position to said dispensing position by an angle of at least 90° and preferably at least 150°.

In another embodiment conceived to facilitate retail distribution or reuse of the device, the inner volume of said container is equal to or less than 30 L, preferably equal to or less than 15 L, preferably equal to or less than 10 L and in a particularly preferred manner equal to or less than 8 L.

A volume of 30 L is considered particularly advantageous for being used in supermarkets, grocery stores, bulk sale stores, and other public establishments to supply the product to the customer. For example, a supermarket can dispense liquid soap from a large capacity container to 20 people in one day.

A 15 L container is very suitable for being transported in a vehicle, such that in those cases in which the container is not going to be carried by hand over a long distance, from the supermarket cart to the car, to the elevator, and then home, this format is very suitable. For example, it has been found that two containers of this volume can provide drinking water for a family of four for about two weeks.

Finally, 10 L containers or smaller can be easily carried by one person over a relatively short distance of less than 1 kilometre. This encourages local retail shopping or reuse of the container for bulk purchases.

Also, to favour comfortable handling of the device by the user and promote reuse, said container further comprises a handle for carrying said container.

Another problem that the invention intends to solve is to propose a device that is inexpensive and lightweight, but which further offers greater health safety, particularly in the event that it is desired to be used multiple times for food products. To that end, in a preferred embodiment, said container is manufactured in a bisphenol A-free plastic material. Glass offers great safety since it does not affect foods, but it is too heavy. In contrast, the bisphenol A-free plastic provides the desired durability and lightness, but it prevents the health problem that a conventional plastic such as polyethylene or the polypropylene may pose.

In a particularly preferred manner, said bisphenol A-free plastic is a copolymer consisting of a mixture of dimethyl terephthalate (DMT), 1,4-cyclohexanedimethanol (CHDM) and 2,2,4,4-tetramethyl-1,3-cyclobutanediol (CBDO). A commercial example of this product is Tritan^{®} from the Eastman Chemical Company.

Also, to improve the preservation and hygiene of the product contained inside same, said container comprises a first cap configured to plug said supply opening.

In another embodiment conceived for bulk product retail establishments, said container further comprises a refill opening, said refill opening being separated from said supply opening. Preferably, the refill opening is larger than the supply opening to facilitate the product loading process when the container is empty.

Preferably, to protect the product contained in said inner chamber, said container comprises a second cap configured to plug said refill opening.

In another embodiment that aims to improve the compactness of the device, said second cap incorporates said supply opening.

In another embodiment that improves the comfort of use in the establishment, said container further comprises a lever to manually rotate said container between said storage position of said product and said at least one dispensing position of said product.

If a user does not return the container to a suitable storage position after the dispensing process in an establishment, there is a risk of the product accidentally pouring out. To prevent this problem, in another embodiment said device comprises elastic return means that functionally connect said container and said support such that starting from said dispensing position of said product, said container automatically returns to said storage position of said product.

Finally, for devices conceived to be used in establishments such as supermarkets or retail stores, said container is transparent or translucent in order to identify the product without the need to look inside the container.

Likewise, the invention also covers other detail features illustrated in the detailed description of an embodiment of the invention and in the coupled figures.

### Brief Description of the Drawings

Other advantages and features of the invention will become apparent from the following description, in which preferred embodiments of the invention are described in a non-limiting manner in reference to the coupled drawings. In the figures:
Figure 1 shows a perspective view of a first embodiment device for storing and dispensing a bulk product according to the invention in the storage position.
Figure 2 shows a front view of the device of Figure 1.
Figure 3 shows a side view of the device of Figure 1.
Figure 4 a top plan view of the device of Figure 1.
Figure 5 shows a front view of the device of Figure 1 in the storage position.
Figure 6 shows a front view of the device of Figure 1 in the dispensing position.
Figure 7 shows a side view of the container of the device of Figure 1 in the vertical position while the container is being filled with bulk product.
Figure 8 shows a side view of the container of the device of Figure 1 in the horizontal position while the container is being filled with bulk product.
Figure 9 shows a perspective view of a second embodiment of the device according to the invention with the bulk product inside same and in the storage position.
Figure 10 shows a perspective view of the device of Figure 9 with the bulk product inside the same and in the dispensing position.
Figures 11 to 15 show perspective views of five different embodiments of the support of the device of Figure 1.
Figure 16 shows a perspective view of a third embodiment of the device for storing and dispensing a bulk product according to the invention in the storage position.
Figure 17 shows a side view of the device of Figure 1 in the dispensing position.
Figure 18 shows a side view of the container of the device of Figure 16 in the vertical position while the container is being filled with bulk product.
Figures 19 to 22 show front and bottom perspective views of two embodiments of the support of the device of Figure 16.
Figure 23 shows a perspective view of a fourth embodiment of the device for storing and dispensing a bulk product according to the invention in the dispensing position.
Figure 24 shows an exploded perspective view of the device of Figure 23 in the storage position.
Figure 25 shows a perspective view of a fifth embodiment of the device for storing and dispensing a bulk product according to the invention in the dispensing position.
Figure 26 shows an exploded side view of the device of Figure 25 in the storage position.
Figure 27 shows a perspective view of a sixth embodiment of the device for storing and dispensing a bulk product according to the invention comprising a plurality of containers in the storage position.
Figure 28 shows a perspective view of the device of Figure 27 with the containers in different rotated positions relative to the support.
Figure 29 shows a perspective view of a seventh embodiment of the device for storing and dispensing a bulk product according to the invention comprising a plurality of containers in the storage position.
Figure 30 shows a perspective view of the device of Figure 29 with the containers in different rotated positions relative to the support.
Figure 31 shows a perspective view of the support of the device of Figure 29.
Figure 32 shows a perspective view of an eighth embodiment of the device according to the invention.
Figure 33 shows a cutaway schematic view of the device of Figure 32.
Figure 34 shows a cutaway schematic view of a ninth embodiment of the device according to the invention.

### Detailed Description of Embodiments of the Invention

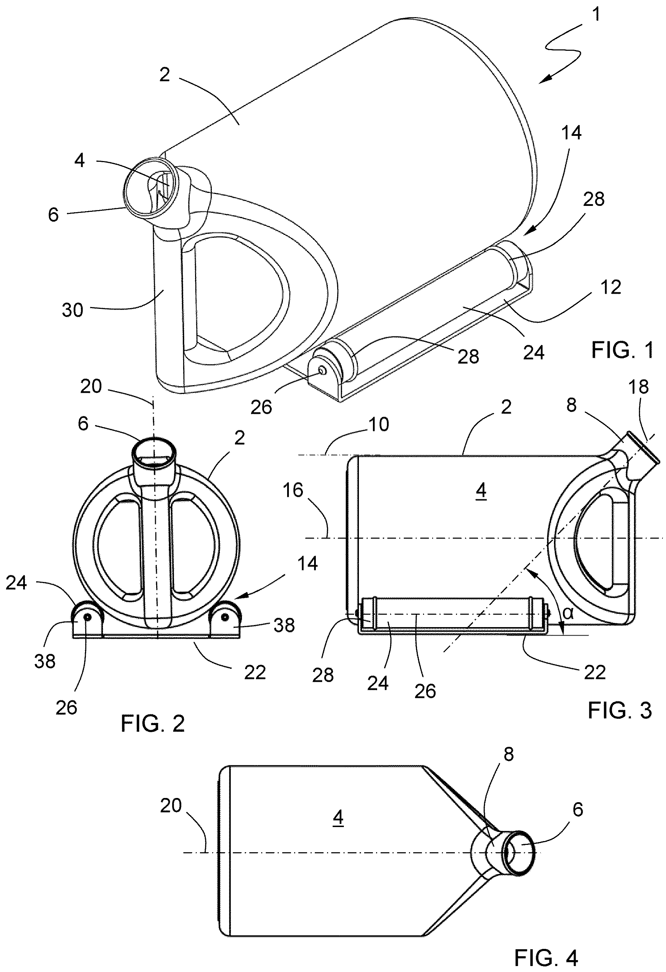

Figures 1 to 8 show a first embodiment of the device 1 for storing and dispensing a liquid, powdered, granular or bulk product 100 according to the invention. The invention does not rule out that the device 1 can be used for wide-scale distribution as a single-use package, but it does seek to increase volumes to reduce the consumption of packages and/or promote reuse of the container 1 to reduce the consumption of materials for bulk purchases.

The device 1 comprises two main parts, i.e., a lower support and a container 2 intended to be coupled to the support 12.

The container 2 forms an inner chamber 4 for storing the product 100. Furthermore, it has a supply opening 6 that communicates said inner chamber 4 with the outside to supply the product 100.

As can be seen in Figures 1 to 3, the container 2 and the support 12 are configured such that the container 2 is coupled in a position horizontal to the support 12. Therefore, the container 2 can rotate relative to the support 12 around a first axis of rotation 16, this axis of rotation 16 being defined by the coupling between the support 12 and the container 2.

The container 2 can thereby rotate relative to the support 12, between at least one storage position of the product 100 seen in Figure 2 and at least one dispensing position of the product 100, for dispensing said product 100 by means of gravity through the supply opening 6, such that in the dispensing position, the supply opening 6 is at a lower height than when it is in the storage position. **In** this embodiment, upon performing this rotation between both positions the product 100 can be dispensed and even metered without the need for additional elements such as spouts or the like. Depending on the dispensing position adopted by the container 2, the outlet flow rate can be varied. The greater the angle of rotation β, the greater the outlet flow rate will be through the supply opening 6.

As can be seen in the figures, in the device 1 according to the invention, during rotation from the storage position to the dispensing position, there is no lateral linear movement, i.e., the container 2 is not linearly displaced.

The main body of the container 2 is formed by a body of revolution around the first axis of rotation 16. Particularly, this body of revolution having a substantially cylindrical shape is formed by a straight generatrix 10 oriented to facilitate the discharge of the product 100 contained in the container 2 when the container 2 rotates from the storage position to a corresponding dispensing position. Preferably, the inner surface and the outer surface of the container are parallel to one another. Alternatively, other shapes can be provided, such as an elliptical section, a sphere, or any type of outwardly convex shape that facilitates the discharge of the product 100 through the opening of the container 2.

The device 1 of Figures 1 to 8 comprises first coupling means 14 for coupling the container 2 to the support 12, the first coupling means 14 defining the first axis of rotation 16 of the container 2 relative to the support 12, between the storage and dispensing positions.

In this case, the first coupling means 14 for allowing relative rotation between the container 2 and the support 12 are formed by a functional combination of the external surface of the cylindrical container 2 supported on two rolling elements of the support 12 of the group consisting of rolling elements. Here, the rolling elements are two idler rollers 24 rotationally mounted on lugs 38 projecting from the support 12, i.e., two rollers that can rotate freely about their own axis 26. In this embodiment, the idler rollers 24 furthermore have rubber rings 28 mounted on the perimeter of the rollers projecting from the surface of the idler rollers 24 and prevent the container 2 from being able to slip relative to the same.

This configuration provides a point contact at four points between the outer surface of the container 2 and the rubber rings 28. The effort required by the user to rotate the container 2 between the storage and dispensing positions is thereby maximally minimised.

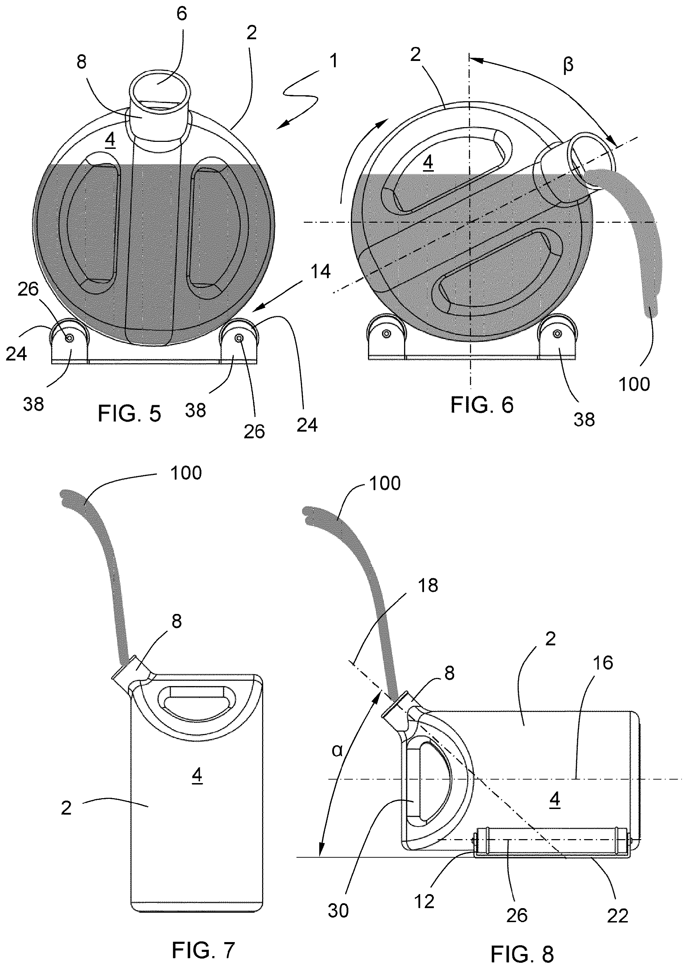

The coupling means 14 are configured such that the container 2 can rotate relative to the support 12 from the storage position to a dispensing position by an angle β of at least 90° as can be seen in Figure 6. In this case, since the container 2 is cylindrical, the latter can rotate up to 360°, which allows the product 100 to be dispensed by rotating both to the right and to the left and be emptied completely.

The inner volume of this container 2 is equal to or less than 10 L and preferably equal to or less than 8 L, which allows it to be used for carrying it by hand short distances for local shopping.

Also, to facilitate the filling process and take maximum advantage of the storage volume, in the device 1 of this embodiment, the supply opening 6 is formed by a tubular conduit 8 that has a second axis 18 seen in Figure 3. This second axis 18 of the tubular conduit 8 is contained in a central vertical plane of symmetry 20 of the container 2. As can also be seen in Figure 3, the tubular conduit 8 projects outwardly relative to an outer contour of the container 2 that delimits the inner chamber 4. Furthermore, the second axis 18 forms a first angle α relative to a horizontal support plane 22 of the support 12.

This angle α in this embodiment is 45° relative to the horizontal plane, such that the container 2 can be refilled both in the vertical position (Figure 7) and in the horizontal position (Figure 8). Furthermore, the container 2 can be carried in the vertical position and stored interchangeably in both positions.

As can be seen in the figures, the container 2 functions like a jug and an adjustable flow rate dispenser at the same time, which is a very significant advantage.

Another very relevant advantage of the device 1 of this embodiment is that the container 2 is substantially cylindrical. Despite having a handle 30, the container 2 has an inner shape that delimits the inner chamber 4, such that it allows the volume occupied by said product 100 contained in said container 2 to be substantially at rest during the relative rotation between the container 2 and the support 12 around said first axis of rotation 16. Therefore, the volume of the product 100 virtually does not move during the rotation of the storage position of Figure 5 to the dispensing position of Figure 6. Accordingly, the effort required for dispensing the product 100 is minimal.

Despite not being shown in the figures, the container 2 may include a first cap configured to plug said supply opening 6, and in this case, it adapts to the outer or inner diameter of the tubular conduit 8.

Other embodiments of the device 1 according to the invention which share many of the features described in the preceding paragraphs are shown below. Accordingly, only the different elements will be described hereinafter, whereas reference is made to the description of the first embodiment for the common elements.

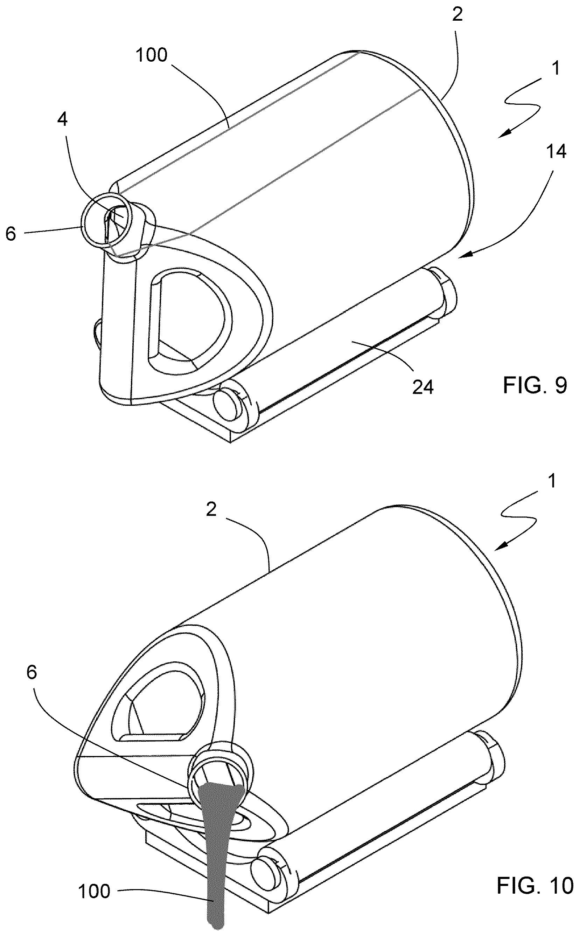

The device 1 of Figures 9 and 10 differs from the above device 1 in that, in this case, the first coupling means 14 for allowing relative rotation between the cylindrical container 2 and the support 12 are formed by the functional combination of the external surface of the container supported directly on two idler rollers 24. In other words, rubber rings are not used in this solution to reduce manufacturing costs. In this case, the contact is a linear rolling support, which reduce the risk of the external surface of the container 2 becoming marked by the relative rotation, since the contact pressure is lower.

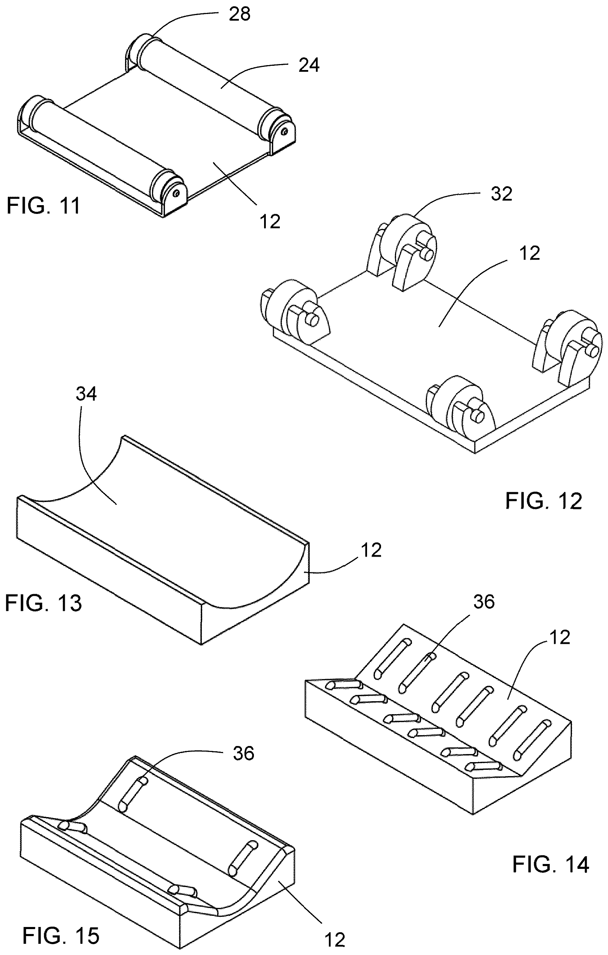

Figures 11 to 15 show in detail different embodiments of the support 12 of the device 1 according to the invention.

Figure 11 shows the solution explained above in which the idler rollers 24 have rubber rings 28 to prevent the container 2 from slipping during the relative rotation.

In Figure 12, the support 12 has rolling elements in the form of rotating idler wheels 32 as the first coupling means 14 for allowing relative rotation between the container 2 and the support 12. The wheels are smooth, but they are preferably rubber wheels. In this case, the linear support of the container 2 on the rotating idler wheels 32 is a much shorter contact line than in the device 1 of Figures 9 and 10, which reduces the effort required to rotate the container 2.

In Figure 13, the first coupling means 14 are formed by a functional combination of the external surface of the container 2 coupled on a cylindrical sliding surface 34. In this case, both surfaces are complementary to one another because they are substantially parallel. Preferably, the sliding surface 34 may have a slip coating or a polished surface finish. For example, the surface 34 may be finished with a polyoxymethylene coating, better known in the art as POM, which has high durability and low friction.

In Figure 14, the support 12 is in the form of a V-shaped wedge and on the support face the first coupling means 14 for allowing relative rotation between the container 2 and the support 12 are formed by the functional combination of the external surface of the container 2 supported on sliding support cords 36. In this case, the support of the container 2 is a point support, and more specifically it is supported on a plurality of points corresponding to each of the support cords 36.

Finally, the support 12 of Figure 15 is similar to that of Figure 14, but in this case the number of support cords 36 has been reduced.

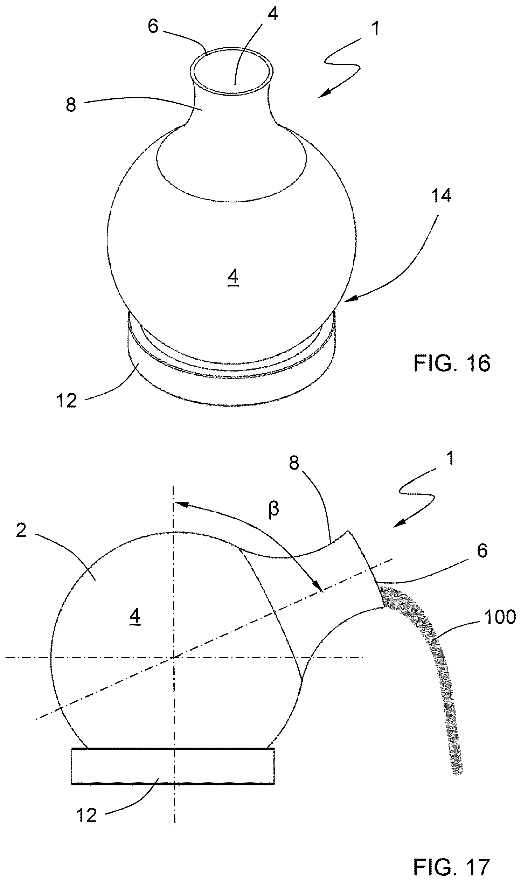

The device 1 of Figures 16 to 20 differs from the device 1 described at the beginning both in the shape of the container 2 and in the shape of the support of the support 12.

In this case, the main body of the container 2 is a sphere both inside and outside, which also facilitates the discharge of the bulk product 100 when the device 1 rotates from the storage position of Figure 16 to a dispensing position shown in Figure 17.

The support 12 is cylinder-shaped with a flat lower base and a concave upper face, particularly spherical. Therefore, the first coupling means 14 for allowing relative rotation are formed by the functional combination of the external surface of the container 2 supported on the sliding surface that is complementary to the outer contour of said container 2 formed by the concave upper face. Furthermore, the external shape of the support 12 could also vary for aesthetic purposes, maintaining the shape of the concave upper face. Alternatively, the support 12 could be a tube, such that the container 2 is supported only on a contact ring.

One advantage of this embodiment is its omnidirectionality. As can be seen in the figures, the container 2 can rotate in multiple directions to adopt any arbitrary dispensing position.

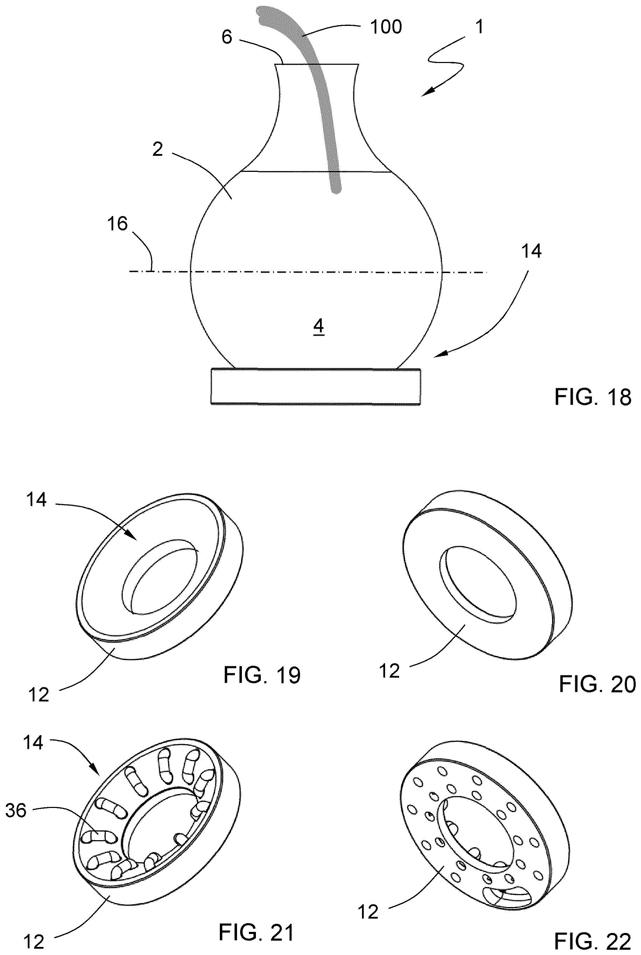

Figures 21 and 22 show an alternative support 12 for the container 2 of Figure 16, in which on the support face, the first coupling means 14 for allowing relative rotation between the container 2 and the support 12 are formed by the functional combination of the external surface of the container 2 supported on sliding support cords 36.

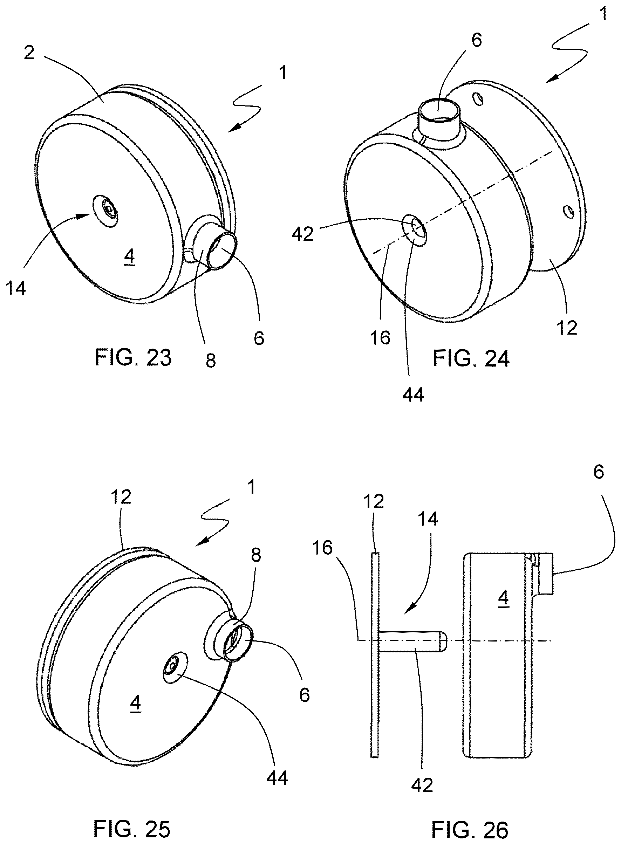

The device 1 of Figures 23 and 24 consists of a cylindrical container 2. In this case, the supply opening 6 that communicates the inner chamber 4 with the outside projects from the cylindrical side wall of the container 2.

Furthermore, in this embodiment the support 12 is a wall support. As a result, in this case, the first coupling means 14 for allowing relative rotation around the first axis of rotation 16 of the container 2 relative to the support 12 between the storage and dispensing positions are formed by a cylindrical central peg 42 projecting horizontally from the support 12 and through a through hole 44 extending along the first axis of rotation 16 of the container 2 in which the central peg 42 fits to provide an external cylindrical sliding surface.

The tubular conduit 8 projects from a central plane, but this is not essential for the invention. In an alternative embodiment, the tubular conduit 8 may project eccentrically and not symmetrically. Furthermore, it may also project at an angle.

Moreover, another relevant advantage of this embodiment consists of the fact that because the container rotates about the central peg 42, the outer cylindrical shape of the container 2 is no longer necessary. Therefore, the container may have other fanciful shapes such as polygonal or other shapes.

The device 1 of Figures 25 and 26 is also formed by a cylindrical container 2 and a wall support 12 and constructively similar to that of the previous Figures 23 and 25.

Nevertheless, in this case, the supply opening 6 that communicates the inner chamber 4 with the outside projects eccentrically from one of the bases of the cylinder that form the container 2, whereas the opposite base is supported against the support 12.

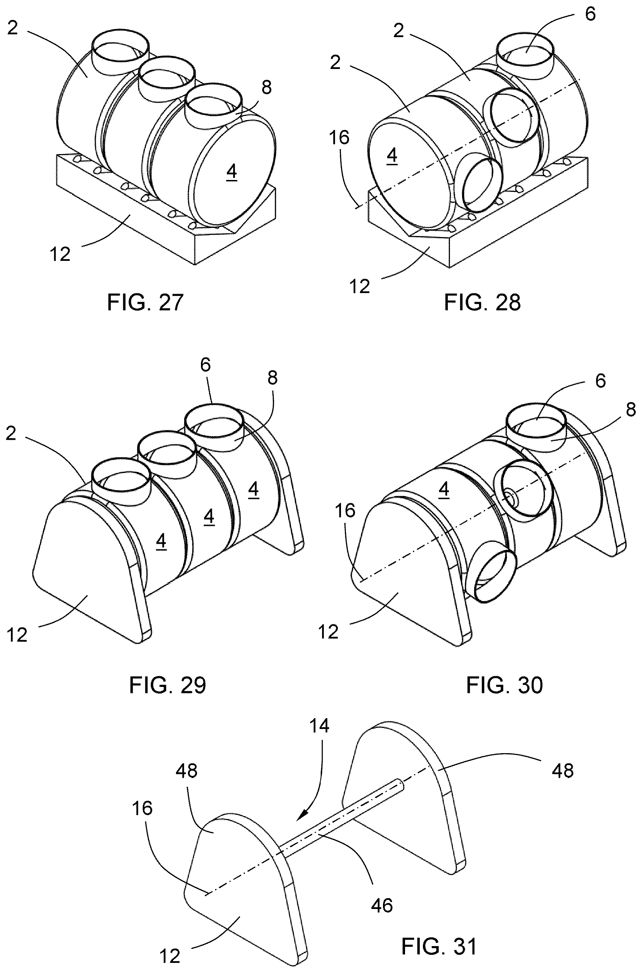

The device 1 of Figures 27 and 28 has a plurality of cylindrical containers 2 which are supported with the cylindrical side wall on a single wedge-shaped support 12. This type of support can be used with wall anchors as a storage and dispensing shelf, making it a device that is particularly suitable for retail stores or supermarkets that sell bulk products.

In this case, the supply opening 6 of each of the containers 2 that communicates the inner chamber 4 with the outside projects from the cylindrical side wall of the respective container 2. In this case, the supply openings 6 have a much larger diameter than in the preceding embodiments to be able to supply granular or bulk products such as, for example, legumes, seeds, cereals, candies, nuts, or other products.

This embodiment of the support of the container 2 on the support 12 is performed by means of first coupling means 14 formed by the functional combination of a cylindrical external surface of each of the containers 2 coupled on several point sliding supports in the form of cords mounted in the wedge of the support 2.

Finally, the device 1 of Figures 29 to 31 also has a plurality of cylindrical containers 2 similar to those described in the embodiment of Figures 23 and 24.

Nevertheless, unlike the embodiment described above, the wall support 12 has been replaced with a tabletop support 12 with a central axis 46 extending between two legs 48 outside the containers 2.

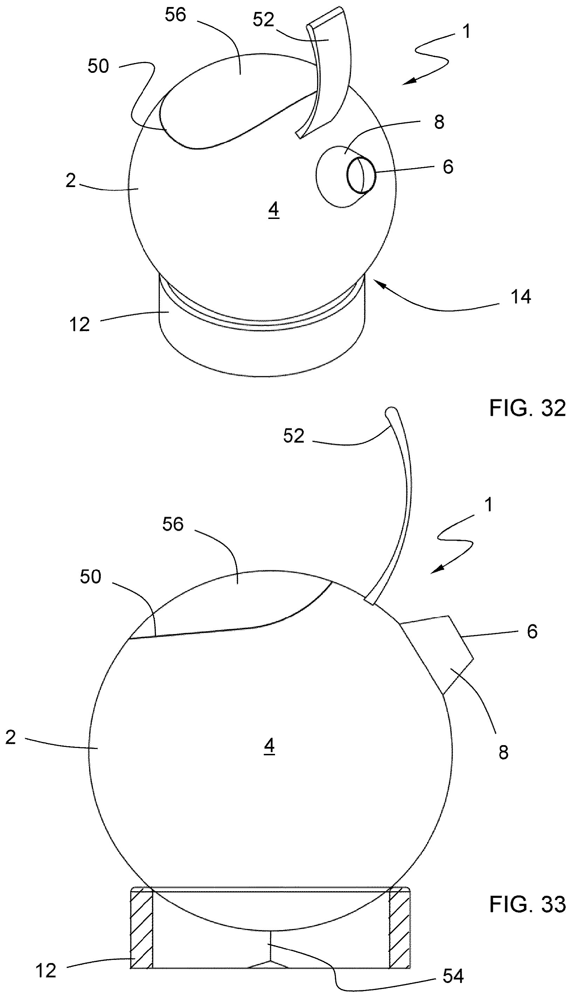

Figures 32 and 33 show a final embodiment of the device 1 according to the invention intended to be used in the sale of bulk products, such as for example supermarkets or retail establishments that sell nuts, legumes, or the like. To that end, in this embodiment the container 2 further comprises a refill opening 50. To that end, the refill opening 50 is separated from said supply opening 6 and has much larger dimensions. Furthermore, the refill opening 50 is located at the upper part of the container 2 and as can be seen in Figure 32, the refill opening is conceived to facilitate loading product in the container 2, since as a result of its dimensions it prevents the need for a funnel to refill the container. As can be seen in the figures, to protect the product against any external agent that may contaminate it, the container 2 comprises a second cap 56 configured to plug said refill opening 50.

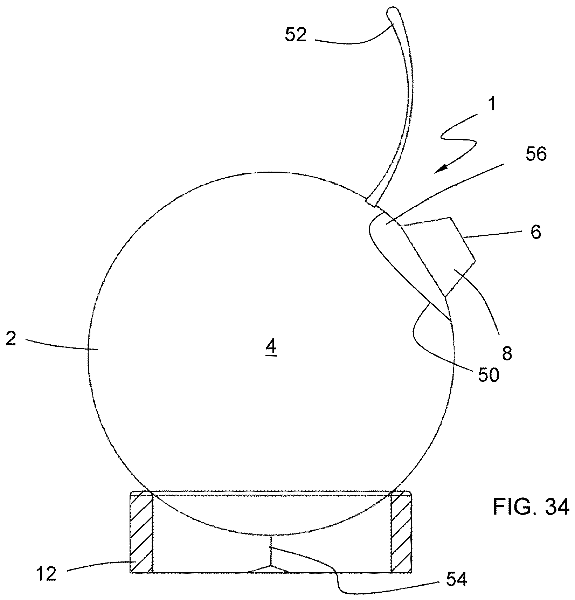

Finally, Figure 34 shows an alternative embodiment relative to the embodiment of Figures 32 and 33 in which the second cap 56 incorporates the supply opening 6. As a result, a large sized refill opening 50 to facilitate refilling is maintained, whereas the supply opening has a smaller cross-section to facilitate metering.

Similarly, the container 2 of this embodiment further comprises a lever 52 so that the user can manually rotate it from the storage position of the product 100 seen in Figure 32 to any one dispensing position of said product 100 as seen in Figure 32. This container 2 is particularly suitable for granular products such as seeds, legumes, spices, or the like.

Finally, the device 1 of this embodiment has elastic return means 54 consisting of an elastic rubber that attaches the support 12 with the lower base of the container 2 and functionally connect them such that starting from a dispensing position of the product 100 as shown in Figure 33, the container 2 automatically returns to the storage position of Figure 32. This prevents product from being easily lost in bulk sale due to misuse by customers who forget to return the container 2 to the storage position once the product 100 has been dispensed.

The described containers 2 can be manufactured in different materials, such as glass or plastic. **In** a particularly preferred manner, they are manufactured in a bisphenol A-free plastic, such as Tritan^{®} from Eastman Chemical Company, for example. Preferably the containers 2 according to the invention are transparent or translucent to facilitate the identification of the product contained inside same.

The embodiments described heretofore represent non-limiting examples, such that the person skilled in the art will understand that beyond the examples shown, multiple combinations between the claimed features are possible within the scope of the invention.

## Claims

1. A device (1) for storing and dispensing a liquid, powdered, granular or bulk product (100), **characterised in that** it comprises
[a] a support (12) and
[b] a container (2) that forms an inner chamber (4) for storing said product (100) and comprises a supply opening (6) that communicates said inner chamber (4) with the outside to supply said product (100),
[c] said container (2) and said support (12) being configured such that said container (2) is coupled to said support (12), said container (2) being able to rotate relative to said support (12) around at least one first axis of rotation (16), said first axis of rotation (16) being defined by the coupling between said support (12) and said container (2), between
[i] at least one storage position of said product (100) and
[ii] at least one dispensing position of said product (100), for dispensing said product (100) by means of gravity through said supply opening (6), such that in said dispensing position, said supply opening (6) is at a lower height than in said storage position.

2. The device (1) according to claim 1, **characterised in that** it comprises first coupling means (14) for coupling said container (2) to said support (12), said first coupling means (14) defining said first axis of rotation (16).

3. The device (1) according to claim 2, **characterised in that** said first coupling means (14) are formed by a functional combination of an external surface of said container (2) supported on one or more elements of said support (12) of the group consisting of rolling elements, point sliding supports, linear sliding supports, sliding surfaces, or combinations thereof.

4. The device (1) according to any one of claims 1 to 3, **characterised in that** said supply opening (6) is formed by a tubular conduit (8) that has a second axis (18), and **in that** said second axis (18) of the tubular conduit (8) is contained in a central vertical plane of symmetry (20) of said container (2), said tubular conduit (8) projecting outwardly relative to an outer contour of said container (2) that delimits said inner chamber (4), and said second axis (18) forming a first angle (α) relative to a horizontal support plane (22) of said support (12).

5. The device (1) according to any one of claims 1 to 4, **characterised in that** said container (2) has a shape that delimits said inner chamber (4), such that it allows that during the relative rotation between said container (2) and said support (12) around said first axis of rotation (16), the volume occupied by said product (100) contained in said container (2) is substantially at rest.

6. The device (1) according to claim 5, **characterised in that** said shape of the container (2) is a sphere centred on said first axis of rotation (16) or a body of revolution around said first axis of rotation (16), said body of revolution being formed by a generatrix (10) comprising a straight line or an outwardly convex curve and oriented to facilitate the discharge of said product (100) contained in said container (2) when said container (2) rotates from said storage position to said dispensing position.

7. The device (1) according to any one of claims 2 to 6, **characterised in that** said coupling means (14) are configured such that said container (2) can rotate relative to said support (12) from said storage position to said dispensing position by an angle (β) of at least 90°.

8. The device (1) according to claim 7, **characterised in that** said angle (β) is at least 150°.

9. The device (1) according to any one of claims 1 to 8, **characterised in that** the inner volume of said container (2) is equal to or less than 30 L.

10. The device (1) according to any one of claims 1 to 8, **characterised in that** the inner volume of said container (2) is equal to or less than 15 L.

11. The device (1) according to any one of claims 1 to 8, **characterised in that** the inner volume of said container (2) is equal to or less than 10 L.

12. The device (1) according to any one of claims 1 to 8, **characterised in that** the inner volume of said container (2) is equal to or less than 8 L.

13. The device (1) according to any one of claims 1 to 12, **characterised in that** said container (2) further comprises a handle (30) for carrying said container (2).

14. The device (1) according to any one of claims 1 to 13, **characterised in that** said container (2) is manufactured in a bisphenol A-free plastic material.

15. The device (1) according to any one of claims 1 to 14, **characterised in that** said container (2) comprises a first cap configured to plug said supply opening (6).

16. The device (1) according to any one of claims 1 to 15, **characterised in that** said container (2) further comprises a refill opening (50), said refill opening (50) being separated from said supply opening (6).

17. The device (1) according to claim 16, **characterised in that** said container (2) comprises a second cap (56) configured to plug said refill opening (50).

18. The device (1) according to claim 17, **characterised in that** said second cap (56) incorporates said supply opening (6).

19. The device (1) according to any one of claims 1 to 18, **characterised in that** said container (2) further comprises a lever (52) to manually rotate said container (2) between
[i] said storage position of said product (100) and
[ii] said dispensing position of said product (100).

20. The device (1) according to any one of claims 1 to 19, **characterised in that** it comprises elastic return means (54) that functionally connect said container (2) and said support (12) such that starting from said dispensing position of said product (100), said container (2) automatically returns to said storage position of said product (100).

21. The device (1) according to any one of claims 1 to 20, **characterised in that** said container (2) is transparent or translucent.
